# EUROPEAN PATENT SPECIFICATION

(11) **EP 4 528 225 B1**
(45) Date of publication and mention of the grant of the patent: **04.11.2026**
(21) Application number: 23864793.7
(22) Date of filing: 15.09.2023
(51) Int. Cl.: G01C 21/34, B60W 30/165, B60W 30/18, B60W 60/00

(54) **TURNING PATH PLANNING METHOD, DEVICE, VEHICLE, AND STORAGE MEDIUM**
VERFAHREN ZUR PLANUNG EINER KURVENBAHN, VORRICHTUNG, FAHRZEUG UND SPEICHERMEDIUM
PROCÉDÉ DE PLANIFICATION DE TRAJET DE VIRAGE, DISPOSITIF, VÉHICULE ET SUPPORT DE STOCKAGE

(30) Priority: 16.09.2022 CN 202211125386
(43) Date of publication of application: 26.03.2025
(73) Proprietor: Guangzhou Xiaopeng Autopilot Technology Co., Ltd., Guangzhou, Guangdong 510000 (CN)
(72) Inventor: XIAO, Zhichong, Guangzhou, Guangdong 510000 (CN); CHEN, Jianxing, Guangzhou, Guangdong 510000 (CN); LI, Yang, Guangzhou, Guangdong 510000 (CN); QIU, Jie, Guangzhou, Guangdong 510000 (CN); WU, Haotao, Guangzhou, Guangdong 510000 (CN)
(74) Representative: DREISS Patentanwälte PartG mbB
(86) International application number: PCT/CN2023/119059
(87) International publication number: WO 2024/056064

(56) References cited:
- EP-A1- 3 699 049
- CN-A- 108 995 708
- CN-A- 112 068 545
- CN-A- 112 683 291
- CN-A- 113 291 318
- CN-A- 114 834 486
- CN-A- 115 200 604
- US-A1- 2021 221 374

## Description

### CROSS-REFERENCE TO RELATED APPLICATION

The present application claims priority to Chinese Patent Application No. 202211125386.X, filed on September 16, 2022.

### FIELD

The present disclosure relates to the technical field of vehicles, and more particularly, to a turning path planning method, a device, a vehicle, and a storage medium.

### BACKGROUND

In urban autonomous driving scenarios, intersection scenarios have extremely complex particularities, and a smooth traffic capacity of the intersection scenarios is one of the important evaluation indicators.

In the related art, based on high-precision map-based autonomous driving, due to inconsistencies between an actual traffic flow and lane lines in an intersection, a behavior of an autonomous driving vehicle driving following lane lines of the high-precision map is inconsistent with a behavior of the actual traffic flow within the intersection, resulting in dangerous cut-in or collision.
EP3699049A1 discloses a vehicle control device (100) which includes: a surrounding object detection part (10b); a target traveling course calculation part (10c); and a corrected traveling course calculation part (10f), where the corrected traveling course calculation part is configured to, when a surrounding object to be avoided is detected by the surrounding object detection part, set an upper limit line of a permissible relative speed at which the own vehicle is permitted to travel with respect to the surrounding object, and derive the corrected traveling course, based on the upper limit line, a given evaluation function, and a given limiting condition, and where the corrected traveling course calculation part has, as the limiting condition, a region outside the width of the own vehicle whose middle is coincident with an estimated traveling course set on the assumption that a current driving state based on the intent of the driver is continued.

### SUMMARY

In order to solve or partially solve problems in the related art, the present disclosure provides a turning path planning method, a device, a vehicle, and a storage medium, capable of generate a planned path through a turning intersection based on an actual traffic flow at the turning intersection to improve safety of a vehicle passing through the turning intersection.

In a first aspect of the present disclosure, a turning path planning method is provided. The method includes: obtaining a plurality of trajectory points of a turning path of a target vehicle in front of a controlled vehicle within a target turning intersection; and determining a planned turning path for the controlled vehicle based on the plurality of trajectory points of the target vehicle, to enable the controlled vehicle to move through the target turning intersection based on the planned turning path. The plurality of trajectory points includes a starting point of the turning path and an ending point of the turning path; and the determining the planned turning path for the controlled vehicle based on the plurality of trajectory points of the target vehicle includes: determining a reference line of a Frenet coordinate system, the reference line being a turning boundary line within the target turning intersection; converting the plurality of trajectory points from a current coordinate system to the Frenet coordinate system based on the reference line; obtaining, in the Frenet coordinate system, an evaluation function value of each of the plurality of paths between the starting point of the turning path and the ending point of the turning path based on the plurality of trajectory points and a predetermined evaluation function; and determining, based on the evaluation function value of each of the plurality of paths, the path among the plurality of paths with the evaluation function value satisfying the predetermined condition as the planned turning path for the controlled vehicle. The obtaining, in the Frenet coordinate system, the evaluation function value of each of the plurality of paths between the starting point of the turning path and the ending point of the turning path based on the plurality of trajectory points and the predetermined evaluation function includes: constructing an SL grid map within a set range of the target turning intersection, the plurality of trajectory points being distributed in grids of the SL grid map; and obtaining, based on a predetermined path search algorithm, the plurality of paths between the starting point of the turning path and the ending point of the turning path in the SL grid map. The obtaining the evaluation function value of each of the plurality of paths includes: for each of the plurality of paths, obtaining a set performance indicator function value of each of the grids on the path; determining a weight value of each of the grids based on distribution data of the plurality of trajectory points in each of the grids; and obtaining the evaluation function value of the path based on the set performance indicator function value and the weight value of each of the grids. The determining, based on the evaluation function value of each of the plurality of paths, the path among the plurality of paths with the evaluation function value satisfying the predetermined condition as the planned turning path for the controlled vehicle includes: determining, based on the evaluation function value of each of the plurality of paths, a path with a smallest evaluation function value among the plurality of paths as the planned turning path for the controlled vehicle.

In one embodiment, the reference line is an outer turning boundary line of the target turning intersection, the outer turning boundary line being obtained by offsetting an outermost lane line of the target turning intersection by a predetermined distance; an inner turning boundary line of the target turning intersection is a straight line connecting a first boundary point at an innermost entrance lane line of the target turning intersection and a second boundary point at an innermost exit lane line of the target turning intersection; and the constructing the SL grid map within the set range of the target turning intersection includes: constructing an SL grid map between the outer turning boundary line and the inner turning boundary line of the target turning intersection.

In one embodiment, the set performance indicator function value of each of the grids is obtained based on a heading angle deviation and/or a distance deviation between the grid and an adjacent grid.

In one embodiment, the determining the weight value of each of the grids based on the distribution data of the plurality of trajectory points in each of the grids includes: setting a weight of a grid with a trajectory point to be greater than a weight of a grid with no trajectory point; and/or setting a weight of a grid with more trajectory points to be greater than a weight of a grid with fewer or no trajectory point.

In one embodiment, the obtaining the evaluation function value of the path based on the set performance indicator function value and the weight value of each of the grids includes: obtaining a correction factor of the weight value of each of the grids based on shape data of the target turning intersection and position data of each of the grids; and obtaining the evaluation function value of the path based on the performance indicator function value, the weight value, and the correction factor of each of the grids.

In one embodiment, the obtaining the correction factor of the weight value of each of the grids based on the shape data of the target turning intersection and the position data of each of the grids includes: obtaining, based on a proportional relation between a length and a width of the target turning intersection, and an L-axis data of each of the grids, deviation data of each of the grids relative to a set safe position; and obtaining the correction coefficient of the weight value of each of the grids based on the deviation data of each of the grids.

In one embodiment, the obtaining the plurality of trajectory points of the turning path of the target vehicle in front of the controlled vehicle within the target turning intersection further includes: determining a same-direction vehicle that satisfies a predetermined condition and is in front of the controlled vehicle and within a set intersection range as the target vehicle. The predetermined condition includes at least one of: a distance between the same-direction vehicle and the controlled vehicle being greater than or equal to a set distance threshold; a difference between a heading angle of the same-direction vehicle and a heading angle of the controlled vehicle being smaller than a set angle threshold; and a speed of the same-direction vehicle being greater than or equal to a set speed threshold.

In one embodiment, the method further includes: smoothing, by a conjugate gradient algorithm, the planned turning path for the controlled vehicle.

In a second aspect of the present disclosure, a computing device is provided. The computing device includes a processor and a memory having executable codes stored thereon. The executable codes, when executed by the processor, cause the processor to perform the method as described above.

In a third aspect of the present disclosure, a vehicle is provided. The vehicle includes the computing device as described above.

In a fourth aspect of the present disclosure, a computer-readable storage medium is provided. The computer-readable storage medium has executable codes stored thereon. The executable codes, when executed by a processor, cause the processor to perform the method as described above.

The technical solutions according to the present disclosure may include the following beneficial effects.

In the technical solutions of the present disclosure, the planned turning path for the controlled vehicle is obtained based on the plurality of trajectory points of the turning path of the target vehicle in front of the controlled vehicle passing through the target turning intersection, to enable the controlled vehicle to move through the target turning intersection based on the planned turning path. The controlled vehicle does not need to identify the lane line of the target turning intersection, and in accordance with an actual traffic flow of the target turning intersection, the turning path is planned based on the plurality of trajectory points of the turning path of the target vehicle in front of the controlled vehicle passing through the target turning intersection to obtain the planned turning path for the controlled vehicle. The turning path that the target vehicle travels within the target turning intersection can avoid a dangerous section or an obstacle within the target turning intersection. When the controlled vehicle passes through the target turning intersection based on the planned turning path, the dangerous section or the obstacle within the target turning intersection can also be avoided. In this way, dangerous cut-in or collision of the controlled vehicle can be avoided to improve the safety of the vehicle passing through the target turning intersection.

It should be understood that the above general description and detailed description below are only exemplary and explanatory, and cannot limit the present disclosure.

### BRIEF DESCRIPTION OF THE DRAWINGS

The above and other objects, features, and advantages of the present disclosure will become more apparent by illustrating exemplary embodiments of the present disclosure in further detail with reference to the accompanying drawings. In the exemplary embodiments of the present disclosure, the same reference numerals generally represent the same components.
FIG. 1 is a schematic flowchart of a turning path planning method according to an embodiment of the present disclosure.
FIG. 2 is a schematic flowchart of a turning path planning method according to another embodiment of the present disclosure.
FIG. 3 is a schematic diagram of the scenario according to the embodiment of FIG. 2.
FIG. 4 is a schematic diagram of an SL grid map and a correction coefficient curve according to an embodiment of the present disclosure.
FIG. 5 is a schematic structural diagram of a computing device according to an embodiment of the present disclosure.

### DETAILED DESCRIPTION OF THE EMBODIMENTS

Implementations of the present disclosure will be described in detail below with reference to the accompanying drawings. Although the implementation of the present disclosure are illustrated in the accompanying drawings, it should be understood that the present disclosure may be embodied in various forms and should not be construed as limited to the embodiments described herein. Instead, these implementations are provided for a thorough understanding of the present disclosure, and can fully convey the scope of the present disclosure to those skilled in the art.

In the related art, based on high-precision map-based autonomous driving, due to inconsistencies between an actual traffic flow and lane lines in an intersection, a behavior of an autonomous driving vehicle driving following lane lines of the high-precision map is inconsistent with a behavior of the actual traffic flow within the intersection, resulting in dangerous cut-in or collision, thereby resulting in a danger hazard when the vehicle passes through the intersection.

To address the aforementioned problems, according to an embodiment of the present disclosure, a turning path planning method is provided. The method can generate a planned path through a turning intersection based on an actual traffic flow at a turning intersection to improve safety of a vehicle passing through the turning intersection.

Technical solutions of the embodiments of the present disclosure will be described in detail below with reference to the accompanying drawings.

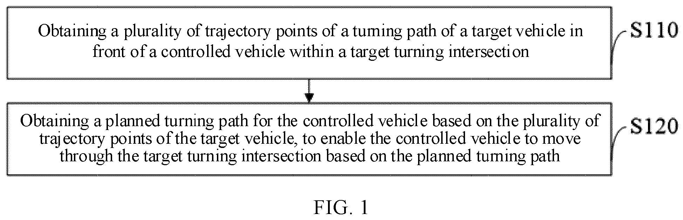

FIG. 1 is a schematic flowchart of a turning path planning method according to an embodiment of the present disclosure.

Referring to FIG. 1, the turning path planning method includes operations at blocks S110 and S120.

At block S110, a plurality of trajectory points of a turning path of a target vehicle in front of a controlled vehicle within a target turning intersection is obtained.

It can be understood that the target turning intersection may be a single left-turning intersection, a single right-turning intersection, or a bidirectional-turning intersection that can turn left and right.

In one embodiment, when an autonomous-driving controlled vehicle passes through the target turning intersection, trajectory points of the target vehicle in front of the controlled vehicle and within the target turning intersection are collected by a setting device to obtain the plurality of trajectory points of the turning path of the target vehicle in front of the controlled vehicle within the target turning intersection.

At block S120, a planned turning path for the controlled vehicle is obtained based on the plurality of trajectory points of the target vehicle, to enable the controlled vehicle to move through the target turning intersection based on the planned turning path.

In one embodiment, the plurality of trajectory points includes a starting point of the turning path and an ending point of the turning path; and the obtaining the planned turning path for the controlled vehicle based on the plurality of trajectory points of the target vehicle includes: determining a reference line of a Frenet coordinate system, the reference line being a turning boundary line within the target turning intersection; converting the plurality of trajectory points from a current coordinate system to the Frenet coordinate system based on the reference line; obtaining, in the Frenet coordinate system, an evaluation function value of each of the plurality of paths between the starting point of the turning path and the ending point of the turning path based on the plurality of trajectory points and a predetermined evaluation function; and determining, based on the evaluation function value of each of the plurality of paths, the path among the plurality of paths with the evaluation function value satisfying the predetermined condition as the planned turning path for the controlled vehicle, to enable the controlled vehicle to move through the target turning intersection based on the planned turning path.

In one embodiment, a starting point of the planned turning path and an ending point of the planned turning path may be obtained based on the plurality of trajectory points of the target vehicle; a turning boundary line on one side of the target turning intersection is determined as the reference line of the Frenet coordinate system, and the plurality of trajectory points is converted from the current coordinate system to the Frenet coordinate system; in the Frenet coordinate system, each of the plurality of paths between the starting point of the planned turning path and the ending point of the planned turning path are obtained based on the plurality of trajectory points, and the evaluation function value of each of the plurality of paths is obtained based on the predetermined evaluation function; and a path with a smallest evaluation function value among the plurality of paths is determined, based on the evaluation function value of each of the plurality of paths, as the planned turning path for the controlled vehicle, to enable the controlled vehicle to move through the target turning intersection based on the planned turning path.

In the embodiments of the present disclosure, the planned turning path for the controlled vehicle is obtained based on the plurality of trajectory points of the turning path of the target vehicle in front of the controlled vehicle passing through the target turning intersection, to enable the controlled vehicle to move through the target turning intersection based on the planned turning path. The controlled vehicle does not need to identify the lane line of the target turning intersection, and in accordance with an actual traffic flow of the target turning intersection, the turning path is planned based on the plurality of trajectory points of the turning path of the target vehicle in front of the controlled vehicle passing through the target turning intersection to obtain the planned turning path for the controlled vehicle. The turning path that the target vehicle travels within the target turning intersection can avoid a dangerous section or an obstacle within the target turning intersection. When the controlled vehicle passes through the target turning intersection based on the planned turning path, the dangerous section or the obstacle within the target turning intersection can also be avoided. In this way, dangerous cut-in or collision of the controlled vehicle can be avoided to improve safety of the vehicle passing through the target turning intersection.

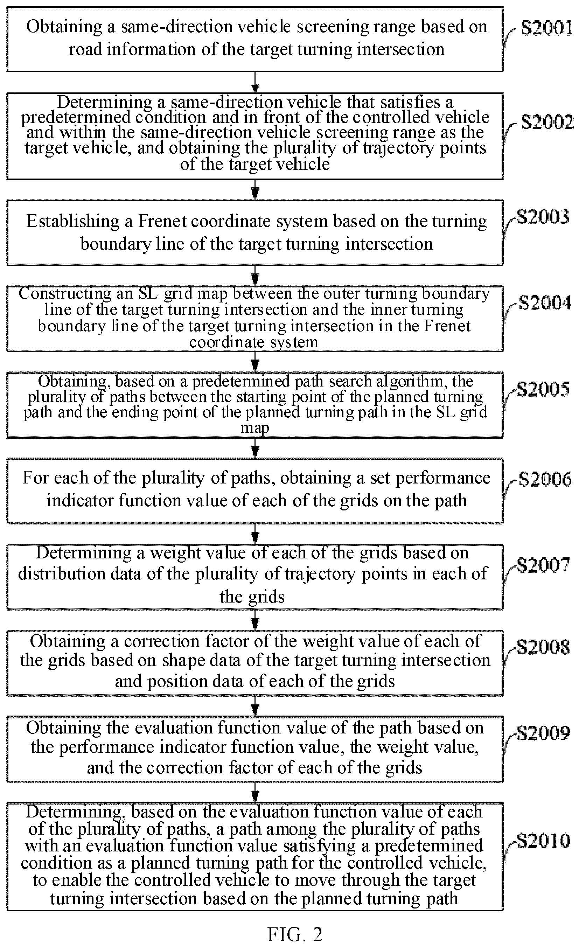

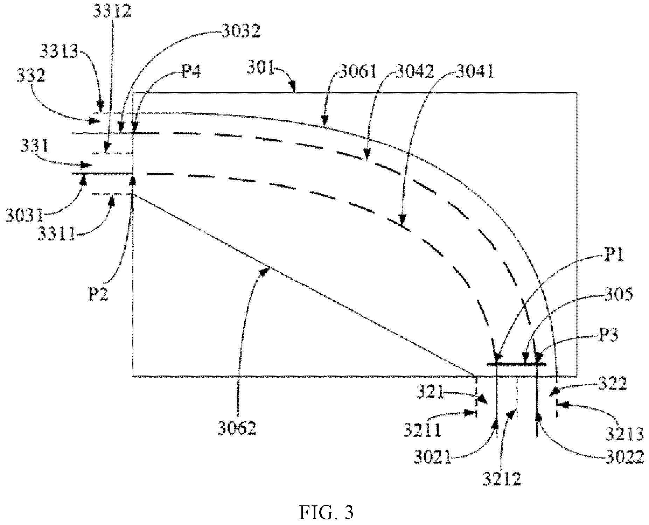

FIG. 2 is a schematic flowchart of a turning path planning method according to another embodiment of the present disclosure. FIG. 3 is a schematic diagram of the scenario according to the embodiment of FIG. 2.

Referring to FIG. 3, in this embodiment, a turning path planning at a left-turning intersection as the target turning intersection will be described as an example. Two lanes is taken as an example in the figure. An intersection frame 301 shows an intersection range of the left-turning intersection. The left-turning intersection has two entrance lanes and two exit lanes, including a first entrance lane 321, a second entrance lane 322, a first exit lane 331, and a second exit lane 332. A first boundary line 3211 and a second boundary line 3212 are lane boundaries of the first entrance lane 321. A second boundary line 3212 and a third boundary line 3213 are lane boundaries of the second entrance lane 322. A fourth boundary line 3311 and a fifth boundary line 3312 are lane boundaries of the first exit lane 331. A fifth boundary line 3312 and a sixth boundary line 3313 are lane boundaries of the second exit lane 332. The left-turning intersection also has a first virtual lane line 3041 within the intersection connecting the first entrance lane line 3021 and the first exit lane line 3031, and a second virtual lane line 3042 within the intersection connecting the second entrance lane line 3022 and the second exit lane line 3032. A starting point of the first virtual lane line 3041 within the intersection is an intersection point P1 of the first entrance lane line 3021 and an intersection stop line 305, and an ending point of the first virtual lane line 3041 within the intersection is an intersection point P2 of the first exit lane line 3031 and the intersection frame 301. A starting point of the second virtual lane line 3042 within the intersection is an intersection point P3 of the second entrance lane line 3022 and the intersection stop line 305, and an ending point of the second virtual lane line 3042 within the intersection is an intersection point P4 of the second exit lane line 3032 and the intersection frame 301. The first virtual lane line 3041 within the intersection and the second virtual lane line 3042 within the intersection may be pre-generated or generated in real time. According to the embodiment of the present disclosure, the planned turning path through the left-turning intersection can be obtained. It can be understood that the lane line may be but not limited to a lane centerline.

Referring to FIG. 2, a turning path planning method includes operations at blocks S2001 and S2010.

At block S2001, a same-direction vehicle screening range is obtained based on road information of the target turning intersection.

In one embodiment, during an autonomous driving process, positioning of the controlled vehicle may be obtained; based on the positioning of the controlled vehicle, a specific position of a current road where the controlled vehicle is located is determined through a predetermined map such as a high-precision map. When it is detected that the current road where the controlled vehicle is located contains the target turning intersection (when the controlled vehicle is within a predetermined range from the target turning intersection), the road information of the target turning intersection may be obtained. The target turning intersection may be a three-way intersection, a crossroads, or other types of intersections. The road information of the target turning intersection may include an entrance lane line, an exit lane line, a virtual lane line of the intersection, a stop line, an intersection range, a lane boundary line of the entrance lane line, a lane boundary line of the exit lane line, etc. In some embodiments, an autonomous driving vehicle may also obtain the road information of the target turning intersection through a sensing device (such as a camera and/or a radar).

As shown in FIG. 3, a set range of the target turning intersection may be obtained based on the road information of the target turning intersection, that is, the same-direction vehicle screening range of the target turning intersection may be obtained.

In a specific implementation, an outermost second virtual lane line 3042 within the target turning intersection may be offset by a predetermined distance to obtain a right boundary line 3061 of the same-direction vehicle screening range, and a straight line connecting an inner boundary line (the first boundary line 3211) of the first entrance lane 321 and an inner boundary line (the fourth boundary line 3311) of the first exit lane 331 is determined as a left boundary line 3062 of the same-direction vehicle screening range. By limiting the same-direction vehicle screening range, it is possible to avoid interference on target vehicle screening caused by a vehicle and obstacle outside the target turning intersection and/or a vehicle traveling in an opposite direction within the target turning intersection.

At block S2002, a same-direction vehicle that satisfies a predetermined condition and is in front of the controlled vehicle and within the same-direction vehicle screening range is determined as the target vehicle, and the plurality of trajectory points of the target vehicle is obtained.

In one embodiment, during the automatic driving process, the controlled vehicle may collect trajectory information of the same-direction vehicle within the same-direction vehicle screening range through the sensing device, and the trajectory information of the same-direction vehicle includes a speed V_{agent} of the same-direction vehicle, a heading angle θ_{agent} of the same-direction vehicle, a distance between the same-direction vehicle and the controlled vehicle, a trajectory point of the same-direction vehicle, etc.; and a heading angle θ_{ego} of the controlled vehicle is obtained through a traveling path for the controlled vehicle. According to the speed V_{agent} of the same-direction vehicle within the same-direction vehicle screening range, the heading angle θ_{agent} of the same-direction vehicle, the distance between the same-direction vehicle and the controlled vehicle, and the heading angle θ_{ego} of the controlled vehicle, same-direction vehicles in front of the controlled vehicle are screened within the same-direction vehicle screening range. A same-direction vehicle with a distance between the same-direction vehicle and the controlled vehicle being greater than or equal to a set distance threshold, a difference between the heading angle θ_{agent} of the same-direction vehicle and the heading angle θ_{ego} of the controlled vehicle being smaller than a set angle threshold, and the speed of the same-direction vehicle being smaller than a set speed threshold is determined as the target vehicle, and a plurality of trajectory points of the target vehicle are obtained. For example, within the same-direction vehicle screening range, the same-direction vehicles in front of the controlled vehicle are screened, and a same-direction vehicle with a distance between a center of the same-direction vehicle and a center of the controlled vehicle being greater than or equal to 3 meters, |θ_{agent} - θ_{ego}| < π/2, and a speed θ_{agent} being greater than or equal to 2.0 meters per second is determined as the target vehicle, and a plurality of trajectory points of the target vehicles are obtained.

At block S2003, a Frenet coordinate system is established based on the turning boundary line of the target turning intersection.

In one embodiment, the turning boundary line of the target turning intersection includes an outer turning boundary line and an inner turning boundary line. The outer turning boundary line is obtained by offsetting the outermost lane line of the target turning intersection by a predetermined distance; and the inner turning boundary line of the target turning intersection is a straight line connecting a first boundary point at an innermost entrance lane line of the target turning intersection and a second boundary point at an innermost exit lane line of the target turning intersection. For example, in an embodiment shown in FIG. 3, the right boundary line 3061 within the same-direction vehicle screening range may be determined as the outer turning boundary line of the target turning intersection, and the left boundary line 3062 within the same-direction vehicle screening range may be determined as the inner turning boundary line of the target turning intersection.

In one embodiment, the outer turning boundary line of the target turning intersection is determined as the reference line of the Frenet coordinate system to establish a Frenet coordinate system. In the Frenet coordinate system, a direction along the reference line is an S axis, and a direction perpendicular to the reference line is an L axis.

At block S2004, an SL grid map between the outer turning boundary line of the target turning intersection and the inner turning boundary line of the target turning intersection is constructed in the Frenet coordinate system.

In one embodiment, in the Frenet coordinate system, a same-direction vehicle screening range between the outer turning boundary line of the target turning intersection and the inner turning boundary line of the target turning intersection is sampled using a set sampling step length, and the SL grid map between the outer turning boundary line of the target turning intersection and the inner turning boundary line of the target turning intersection is constructed. In the Frenet coordinate system, the set sampling step length includes an S-axis set sampling step length s in the S-axis direction and an L-axis set sampling step length l in the L-axis direction. In the Frenet coordinate system, the same-direction vehicle screening range of the target turning intersection is sampled using the S-axis sampling step length s and the L-axis set sampling step length l, and the SL grid map within the set range of the target turning intersection is constructed. The SL grid map includes a plurality of grids, and a size of each of the plurality of grids is s×l.

In one embodiment, the sampling step length s is greater than the sampling step length l. The S-axis set sampling step length s may range from 1.0 meters to 5.0 meters, for example, a value is 3.0 meters. The L-axis set sampling step length l may range from 0.8 meters to 2.0 meters, for example, a value is 0.8 meters.

At block S2005, based on a predetermined path search algorithm, the plurality of paths between the starting point of the planned turning path and the ending point of the planned turning path is obtained in the SL grid map.

In one embodiment, the plurality of trajectory points of the target vehicle includes a starting point of the turning path and an ending point of the turning path. The starting point of the planned turning path and the ending point of the planned turning path may be obtained based on the plurality of trajectory points of the target vehicle. In some embodiments, as shown in FIG. 3, based on a position where the vehicle enters the target turning intersection, a point P1 or a point P3 may be determined as the starting point, and a point P2 or a point P4 may be determined as the ending point. For example, when the controlled vehicle enters the target turning intersection in the first entrance lane 321, the point P1 is determined as the starting point of the planned turning path, and the point P2 is determined as the ending point of the planned turning path.

In one embodiment, a Dijkstra algorithm may be used to search in the SL grid map in the S axis direction of the Frenet coordinate system to obtain a plurality of search paths between the starting point of the turning path and the ending point of the turning path. For example, a center point of a grid through which the search path passes may be used as a trajectory point of the search path.

At block S2006, for each of the plurality of paths, a set performance indicator function value of each of the grids on the path is obtained.

In one embodiment, the set performance indicator function value of each of the grids is obtained based on a heading angle deviation and/or a distance deviation between the grid and an adjacent grid.

In one embodiment, the set performance indicator function value of the grid is also referred as to cost of the grid, including heading cost of the grid and a distance cost of the grid. The cost of the grid is represented by G_{gird}; the heading cost is represented by G_{h-c}; and the distance cost is represented by G_{d-c}. The cost G_{gird} of the grid may be obtained at least based on the heading cost G_{h-c} and the distance cost G_{d-c}. For each of the plurality of paths, the heading cost of each of the grids on the path may be obtained based on a heading angle deviation between the grid and a next adjacent grid; and the distance cost of each of the grids on the path may be obtained based on a distance deviation between the grid and the next adjacent grid.

In one embodiment, SL coordinates of two center points of two grids are converted into XY coordinates of a Cartesian coordinate system, and a vector angle formed by the two center points is determined as a heading angle deviation between the two grids.

In one embodiment, a Euclidean distance between the two center points of the two grids is determined as a distance deviation between the two grids.

At block S2007, a weight value of each of the grids is determined based on distribution data of the plurality of trajectory points in each of the grids.

In one embodiment, the weight value of each of the grids in the search path may be set based on the distribution data of the plurality of trajectory points in each of the grids. For example, a weight of a grid with a trajectory point is set to be greater than a weight of a grid with no trajectory point. For another example, a weight of a grid with more trajectory points is set to be greater than a weight of a grid with fewer or no trajectory point.

In one embodiment, the cost of the grid is obtained based on the heading cost G_{h-c} and the distance cost G_{d-c}, and a path with a minimum weighted sum of the costs of each of grids in the plurality of paths may be determined as the planned turning path for the controlled vehicle. In this case, in order to enable the weight of the grid with the trajectory point to be greater than the weight of the grid with no trajectory point, a weight value of the grid with the trajectory point is set to be smaller than a weight value of the grid with no trajectory point; and/or, a weight value of the grid with more trajectory points is set to be smaller than a weight value of the grid with fewer or no trajectory point.

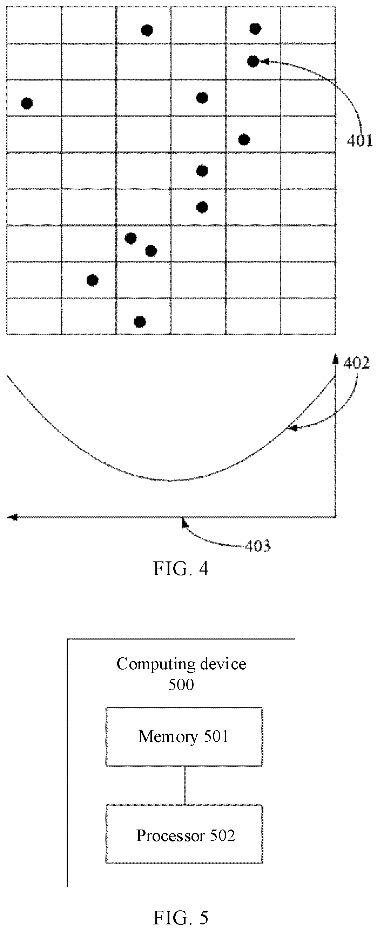

In one embodiment, the plurality of trajectory points of the target vehicle are converted based on the reference line of the Frenet coordinate system from the current coordinate system to the Frenet coordinate system, and the plurality of trajectory points obtained after the conversion is distributed in the grids of the SL grid map. Distribution data of the plurality of trajectory points in each of the grids may be obtained based on Frenet coordinates of the plurality of trajectory points of the target vehicle and position data of each of the grids in the SL grid map. FIG. 4 shows an example of an SL grid map. In the SL grid map, a dot 401 represents the trajectory point of the target vehicle. Some grids in the SL grid map do not have the trajectory point of the target vehicle; some grids in the SL grid map have one trajectory point of the target vehicle; and some grids in the SL grid map have two trajectory points of the target vehicle.

The above-mentioned operation of obtaining the cost of the grid based on the heading cost G_{h-c} and the distance cost G_{d-c}, the weight value of the grid may also be refered as to an attenuation factor F_{agent} of the grid, and the attenuation factor F_{agent} is a coefficient smaller than or equal to 1. An attenuation factor F_{agent} of the grid with the trajectory point of the target vehicle is smaller than 1, and an attenuation factor F_{agent} of the grid with no trajectory point of the target vehicle is 1.0. In a specific example, an attenuation factor F_{agent} of a grid with at least two trajectory points of the target vehicle is 0.6; an attenuation factor F_{agent} of a grid with one trajectory point of the target vehicle is 0.8; and an attenuation factor F_{agent} of a grid with no trajectory point of the target vehicle is 1.0. By setting the attenuation factor F_{agent} of the grid with the trajectory point of the target vehicle to be smaller than 1, cost of each grid with the trajectory point of the target vehicle may be reduced.

In one embodiment, for an i-th grid of the SL grid map, its weighted cost is represented as G_{gird-i}=F_{agent-i}*(G_{h-c-i}+G_{d-c-i}), where F_{agent-i}, G_{h-c-i}, and G_{d-c-i} represent an attenuation factor, a heading cost, and distance cost of the i-th grid in the SL grid map, respectively.

At block S2008, a correction factor of the weight value of each of the grids is obtained based on shape data of the target turning intersection and position data of each of the grids.

In one embodiment, in order to enable the controlled vehicle to avoid the lane boundary of the target turning intersection as much as possible when moving at the target turning intersection in accordance with the planned turning path, an offset distance of each of the grids relative to a set safety position may be obtained based on a proportional relation between a length K and a width W of the target turning intersection and L-axis data of each of the grids in the SL grid map; and the correction coefficient of the weight value of each of the grids is obtained based on the offset distance of each grid.

As shown in FIG. 4, a correction coefficient curve 402 is designed in the L axis 403 direction of the Frenet coordinate system, and the correction coefficient may enable a grid closer to the set safety position to have a higher weight.

In one embodiment, F_{L-i} represents a correction coefficient of the i-th grid in the SL grid map and for the i-th grid in the SL grid map, its corrected weighted cost is represented as G_{gird-i}=F_{L-i}*F_{agent-i}*(G_{h-c-i}+G_{d-c-i}).

In the embodiment where it is determined that the path with the minimum weighted sum of the cost of each of the grids in the plurality of paths is the planned turning path for the controlled vehicle, the correction coefficient F_{L-i} may be a coefficient greater than or equal to 1, and the correction coefficient approaches 1 as the grid gets closer to the set safety center.

In one embodiment, the correction coefficient curve 402 is a quasi-parabola in the L-axis direction of the Frenet coordinate system. A center of the correction coefficient curve 402 corresponds to the L-axis center position of the SL grid map, and may be represented as Lx/2, and an extreme value corresponding to the center position is 1.0. Since shapes of target turning intersections of different paths are different, the center position of the correction coefficient curve may be adjusted using a length-width ratio of the intersection.

In one embodiment, the correction coefficient F_{L-i} of a weight value of the i-th grid of the SL grid map may be calculated by the following formula: ${F}_{L - i} = {\left({L}_{i}-\frac{Lx}{2}∗\frac{W}{K}\right)}^{2} + 1.0$

Where Lᵢ represents the L-axis data of the i-th grid of the SL grid map, which may be obtained by multiplying i by the L-axis sampling step 1; ${L}_{i} - \frac{Lx}{2} ∗ \frac{W}{K}$ represents the offset distance of the i-th grid relative to the set safety position; Lx/2 represents the center position of the L-axis of the SL grid map.

At block S2009, the evaluation function value of each path is obtained based on the performance indicator function value, the weight value, and the correction factor of each of the grids.

In one embodiment, in the Frenet coordinate system, for each of the plurality of paths, the path passes through a plurality of grids in the SL grid map, connecting the starting point of the planned turning path and the ending point of the planned turning path. The set performance indicator function value of each of the grids on the path is weighted and added, and a weighted sum of the set performance indicator function value of each of the grids on the path is determined as the evaluation function value of the path.

In one embodiment, based on the weight value and the correction coefficient of each of the grids, the corrected weighted cost of each of the grids is represented as G_{gird-i}=F_{L-i}*F_{agent-i}*(G_{h-c-i}+G_{d-c-i}). For each of the plurality of paths, the evaluation function value of the path may be a sum ΣG_{gird} of corrected weighted cost of the plurality of grids in the path. For example, for one of the plurality of paths, the path passes through N grids, and corrected weighted cost of each of the N grids is obtained based on G_{gird-i}=F_{L-i}*F_{agent-i}*(G_{h-c-i}+G_{d-c-i}); and the corrected weighted cost of each of the N grids is added to obtain a weighted cost sum ΣG_{gird} of the N grids, and the weighted cost sum ΣG_{gird} of the N grids is the evaluation function value of the path.

At block S2010, a path among the plurality of paths with an evaluation function value satisfying a predetermined condition is determined as a planned turning path for the controlled vehicle based on the evaluation function value of each of the plurality of paths, to enable the controlled vehicle to move through the target turning intersection based on the planned turning path.

In one embodiment, based on the evaluation function value of each of the plurality of paths of the Frenet coordinate system, a path among the plurality of paths with a smallest evaluation function value may be determined as the planned turning path in the Frenet coordinate system for the controlled vehicle to pass through the target turning intersection, to enable the controlled vehicle to move through the target turning intersection based on the planned turning path.

In one embodiment, the planned turning path in the Frenet coordinate system may be converted into a planned turning path in the Cartesian coordinate system by coordinate system conversion, to enable the controlled vehicle to move through the target turning intersection based on the planned turning path in the Cartesian coordinate system.

In one embodiment, the planned turning path for the controlled vehicle may be smoothed by a smoothing algorithm to obtain a smooth planned turning path passing through the target turning intersection. In some embodiments, the planned turning path for the controlled vehicle may be smoothed by including but not limited to a Conjugate Gradient (CG) algorithm to obtain the smooth planned turning path, to enable the controlled vehicle to smoothly move through the target turning intersection based on the smooth planned turning path. The smoothing process using the CG algorithm is simple to implement and less computationally time-comsuming.

In the embodiments of the present disclosure, the planned turning path for the controlled vehicle is obtained based on the plurality of trajectory points of the turning path of the target vehicle in front of the controlled vehicle passing through the target turning intersection, to enable the controlled vehicle to move through the target turning intersection based on the planned turning path. The controlled vehicle does not need to identify the lane line of the target turning intersection, and in accordance with an actual traffic flow of the target turning intersection, the turning path is planned based on the plurality of trajectory points of the turning path of the target vehicle in front of the controlled vehicle passing through the target turning intersection to obtain the planned turning path for the controlled vehicle. The turning path that the target vehicle travels within the target turning intersection can avoid the dangerous section or the obstacle within the target turning intersection. When the controlled vehicle passes through the target turning intersection based on the planned turning path, the dangerous section or the obstacle within the target turning intersection can also be avoided. In this way, the dangerous cut-in or the collision of the controlled vehicle can be avoided to improve the safety of the vehicle passing through the target turning intersection.

Further, in the embodiments of the present disclosure, the turning boundary line within the target turning intersection is determined as the reference line of the Frenet coordinate system to construct the Frenet coordinate system; the SL grid map within the set range of the target turning intersection is constructed in the Frenet coordinate system, and the plurality of trajectory points of the target vehicle is converted from the current coordinate system to the Frenet coordinate system. The plurality of trajectory points is distributed in the grids of the SL grid map. The weight value of each of the grids is determined based on the distribution data of the plurality of trajectory points in each of the grids of the SL grid map. The weight value of the grid with the trajectory point is set to be smaller than the weight value of the grid with no trajectory point; and/or, the weight value of the grid with more trajectory points is set to be smaller than the weight value of the grid with fewer or no trajectory point. By setting the weight value of each of the grids, the cost of each of the grids with the trajectory point of the target vehicle is reduced. As a result, the planned turning path for the controlled vehicle passes through the trajectory points of the target vehicle as much as possible. In this way, the dangerous cut-in or the collision of the controlled vehicle may be avoided to improve the safety of the vehicle passing through the target turning intersection.

Further, in the embodiments of the present disclosure, the deviation data of each of the grids relative to the set safe position are obtained based on the proportional relation between the length and the width of the target turning intersection, and the L-axis data of each of the grids; the correction coefficient of each of the grids is obtained based on the deviation data of each of the grids, and the correction coefficient is greater than 1. The correction coefficient of each of the grids decreases as the grid gets closer to the center position of the target turning intersection. As a result, the cost of each of the grids decreases as the grid gets closer to the center position. Therefore, the planned turning path for the controlled vehicle is closer to the center position within the set range of the target turning intersection. In this way, the planned turning path for the controlled vehicle may be avoided from being located at the boundary of the target turning intersection. When the controlled vehicle moves through the target turning intersection based on the planned turning path, the controlled vehicle may deviate from the boundaries on the two sides of the target turning intersection. In this way, the dangerous cut-in or the collision of the controlled vehicle may be avoided to improve the safety of the vehicle passing through the target turning intersection.

Corresponding to the aforementioned method embodiments using functional implementations, the present disclosure also provides a computing device and corresponding embodiments.

FIG. 5 is a schematic structural diagram showing a computing device according to an embodiment of the present disclosure.

The computing device may be one or more computer terminals, or a server, or a combination of a computer terminal and a server, etc. It may be understood that the server may be a physical server or a logical server virtualized from a plurality of physical servers. The server may also be a server group composed of a plurality of servers that may communicate with each other, and each functional module may be distributed on each of the plurality servers in the server group. In some embodiments, the computing device is an in-vehicle electronic device such as, but not limited to an electronic control unit of a vehicle, an autonomous driving system controller, an intelligent navigation device, a smart phone, a smart tablet device and other mobile devices.

Referring to FIG. 5, the computing device 500 includes a memory 501 and a processor 502.

It may be understood that in the present disclosure, the computing device 500 includes a processor 502 and a memory 501 having a computer program stored therein. The above-mentioned processor 502 is configured to, when executing the stored computer program, implement the turning path planning method. The computing device 500 may be one or more computer terminals, or a server, or a combination of a computer terminal and a server, etc. It may be understood that the server may be a physical server or a logical server virtualized from a plurality of physical servers. The server may also be a server group composed of a plurality of servers that may communicate with each other, and each functional module may be distributed on each of the plurality servers in the server group. In some embodiments, the computing device 500 is an in-vehicle electronic device such as, but not limited to an electronic control unit of a vehicle, an autonomous driving system controller, an intelligent navigation device, a smart phone, a smart tablet device, and other mobile devices.

The processor 502 may be a Central Processing Unit (CPU), a general-purpose processor, a Digital Signal Processor (DSP), an Application Specific Integrated Circuit (ASIC), a Field-Programmable Gate Array (FPGA), or other programmable logic devices, a discrete gate or a transistor logic device, a discrete hardware component, etc. The general-purpose processor may be a microprocessor, or the processor may further be any conventional processor, etc.

The memory 501 may include various types of storage units, such as a system memory, Read-Only Memory (ROM), and permanent storage devices. The ROM may store static data or instructions required by the processor 502 or other modules of the computer. The permanent storage device may be a readable and writable storage device. The permanent storage device may be a non-volatile storage device that does not lose stored instructions and data even if the computer is powered off. In some embodiments, the permanent storage device uses a large-capacity storage device (e.g., a magnetic or optical disk, a flash memory) as a permanent storage device. In other embodiments, the permanent storage device may be a removable storage device (e.g., a floppy disk, an optical drive). The system memory may be a readable and writable storage device or a volatile readable and writable storage device, such as a dynamic random access memory. The system memory may store some or all instructions and data required by the processor during running time. In addition, the memory 501 may include any combination of computer-readable storage media, including various types of semiconductor memory chips (e.g., Dynamic Random-Access Memory, DRAM; Static Random-Access Memory, SRAM; Synchronous Dynamic Random-Access memory, SDRAM, a flash memory, a programmable read-only memory), and a disk and/or an optical disk may also be used. In some embodiments, the memory 501 may include a removable storage device that may be read and/or written, such as a laser disc (CD), a read-only digital versatile disc (such as a Digital Video Disc-Read Only Memory, DVD-ROM; a double-layer DVD-ROM), a read-only Blu-ray disc, an ultra-density optical disc, a flash memory card (such as an SD card, a mini SD card, a Micro-SD card, etc.), a magnetic floppy disk, etc. A computer-readable storage media do not contain carrier waves and instantaneous electronic signals transmitted wirelessly or by wire.

The memory 501 has executable codes stored thereon. The executable codes, when executed by the processor 502, cause the processor 502 to perform part or all of the method as described above.

The present disclosure also provides a vehicle. The vehicle includes the computing device 500 as described above.

In addition, the method according to the present disclosure may also be implemented as a computer program or a computer program product. The computer program or the computer program product includes computer program code instructions for executing part or all of the steps in the above method of the present disclosure.

Alternatively, the present disclosure may also be implemented as a computer-readable storage medium (or a non-transitory machine-readable storage medium, or a machine-readable storage medium) having executable codes (or a computer program, or computer instruction codes) stored thereon. The executable codes (or the computer program, or the computer instruction codes), when executed by a processor of a vehicle (or a computing device, a server, etc.), cause the processor to execute part or all of the steps of the above method according to the present disclosure.

## Claims

1. A turning path planning method, comprising:
obtaining (S110) a plurality of trajectory points of a turning path of a target vehicle in front of a controlled vehicle within a target turning intersection, the plurality of trajectory points comprising a starting point of the turning path and an ending point of the turning path;
obtaining a plurality of paths between the starting point of the turning path and the ending point of the turning path; and
determining (S120), based on the plurality of trajectory points of the target vehicle, a path among the plurality of paths with an evaluation function value satisfying a predetermined condition as a planned turning path for the controlled vehicle, to enable the controlled vehicle to move through the target turning intersection based on the planned turning path,
wherein said determining (S120), based on the plurality of trajectory points of the target vehicle, the path among the plurality of paths with the evaluation function value satisfying the predetermined condition as the planned turning path for the controlled vehicle comprises:
determining a reference line of a Frenet coordinate system, the reference line being a turning boundary line within the target turning intersection;
converting the plurality of trajectory points from a current coordinate system to the Frenet coordinate system based on the reference line;
obtaining, in the Frenet coordinate system, an evaluation function value of each of the plurality of paths between the starting point of the turning path and the ending point of the turning path based on the plurality of trajectory points and a predetermined evaluation function; and
determining (S2010), based on the evaluation function value of each of the plurality of paths, the path among the plurality of paths with the evaluation function value satisfying the predetermined condition as the planned turning path for the controlled vehicle,
wherein said obtaining the plurality of paths between the starting point of the turning path and the ending point of the turning path comprises:
constructing an SL grid map within a set range of the target turning intersection, the plurality of trajectory points being distributed in grids of the SL grid map; and
obtaining (S2005), in the SL grid map based on a predetermined path search algorithm, the plurality of paths between the starting point of the turning path and the ending point of the turning path,
wherein said obtaining the evaluation function value of each of the plurality of paths comprises:
for each of the plurality of paths, obtaining (S2006) a set performance indicator function value of each of the grids on the path;
determining (S2007) a weight value of each of the grids based on distribution data of the plurality of trajectory points in each of the grids; and
obtaining the evaluation function value of the path based on the set performance indicator function value and the weight value of each of the grids,
wherein the determining (S2010), based on the evaluation function value of each of the plurality of paths, the path among the plurality of paths with the evaluation function value satisfying the predetermined condition as the planned turning path for the controlled vehicle comprises: determining, based on the evaluation function value of each of the plurality of paths, a path with a smallest evaluation function value among the plurality of paths as the planned turning path for the controlled vehicle.

2. The method according to claim 1, wherein:
the reference line is an outer turning boundary line of the target turning intersection, the outer turning boundary line being obtained by offsetting an outermost lane line of the target turning intersection by a predetermined distance;
an inner turning boundary line of the target turning intersection is a straight line connecting a first boundary point at an innermost entrance lane line of the target turning intersection and a second boundary point at an innermost exit lane line of the target turning intersection; and
said constructing the SL grid map within the set range of the target turning intersection comprises:
constructing (S2004) an SL grid map between the outer turning boundary line and the inner turning boundary line of the target turning intersection.

3. The method according to claim 1, wherein the set performance indicator function value of each of the grids is obtained based on a heading angle deviation and/or a distance deviation between the grid and an adjacent grid.

4. The method according to claim 1, wherein said determining (S2007) the weight value of each of the grids based on the distribution data of the plurality of trajectory points in each of the grids comprises:
setting a weight of a grid with a trajectory point to be greater than a weight of a grid with no trajectory point; and/or
setting a weight of a grid with more trajectory points to be greater than a weight of a grid with fewer or no trajectory point.

5. The method according to claim 1, wherein said obtaining the evaluation function value of the path based on the set performance indicator function value and the weight value of each of the grids comprises:
obtaining (S2008) a correction factor of the weight value of each of the grids based on shape data of the target turning intersection and position data of each of the grids; and
obtaining (S2009) the evaluation function value of the path based on the performance indicator function value, the weight value, and the correction factor of each of the grids.

6. The method according to claim 5, wherein said obtaining (S2008) the correction factor of the weight value of each of the grids based on the shape data of the target turning intersection and the position data of each of the grids comprises:
obtaining, based on a proportional relation between a length and a width of the target turning intersection, and an L-axis data of each of the grids, deviation data of each of the grids relative to a set safe position; and
obtaining the correction coefficient of the weight value of each of the grids based on the deviation data of each of the grids.

7. The method according to any one of claims 1 to 6, wherein said obtaining (S110) the plurality of trajectory points of the turning path of the target vehicle in front of the controlled vehicle within the target turning intersection further comprises:
determining (S2002) a same-direction vehicle that satisfies a predetermined condition and is in front of the controlled vehicle and within a set intersection range as the target vehicle, the predetermined condition comprising at least one of:
a distance between the same-direction vehicle and the controlled vehicle being greater than or equal to a set distance threshold;
a difference between a heading angle of the same-direction vehicle and a heading angle of the controlled vehicle being smaller than a set angle threshold; and
a speed of the same-direction vehicle being greater than or equal to a set speed threshold.

8. The method according to claim 7, further comprising:
smoothing, by a conjugate gradient algorithm, the planned turning path for the controlled vehicle.

9. A computing device (500), comprising:
a processor (502); and
a memory (501) having executable codes stored thereon, wherein the executable codes, when executed by the processor (502), cause the processor (502) to perform the method according to any one of claims 1 to 8.

10. A vehicle comprising the computing device according to claim 9.

11. A computer-readable storage medium, having executable codes stored thereon, wherein the executable codes, when executed by a processor, cause the processor to perform the method according to any one of claims 1 to 8.

## Patentansprüche

1. Verfahren zur Planung eines Abbiegepfads, umfassend:
Erhalten (S110) mehrerer Trajektorienpunkte eines Abbiegepfads eines Zielfahrzeugs vor einem gesteuerten Fahrzeug innerhalb eines Zielabbiegeknotenpunkts, wobei die mehreren Trajektorienpunkte einen Anfangspunkt des Abbiegepfads und einen Endpunkt des Abbiegepfads umfassen;
Erhalten mehrerer Pfade zwischen dem Anfangspunkt des Abbiegepfads und dem Endpunkt des Abbiegepfads; und
Bestimmen (S120), basierend auf den mehreren Trajektorienpunkten des Zielfahrzeugs, eines Pfads unter den mehreren Pfaden, dessen Bewertungsfunktionswert eine vorbestimmte Bedingung erfüllt, als einen geplanten Abbiegepfad für das gesteuerte Fahrzeug, um dem gesteuerten Fahrzeug zu ermöglichen, den Zielabbiegeknotenpunkt basierend auf dem geplanten Abbiegepfad zu durchfahren,
wobei das Bestimmen (S120), basierend auf den mehreren Trajektorienpunkten des Zielfahrzeugs, des Pfads unter den mehreren Pfaden, dessen Bewertungsfunktionswert die vorbestimmte Bedingung erfüllt, als den geplanten Abbiegepfad für das gesteuerte Fahrzeug umfasst:
Bestimmen einer Referenzlinie eines Frenet-Koordinatensystems, wobei die Referenzlinie eine Abbiegebegrenzungslinie innerhalb des Zielabbiegeknotenpunkts ist;
Umwandeln der mehreren Trajektorienpunkte aus einem aktuellen Koordinatensystem in das Frenet-Koordinatensystem basierend auf der Referenzlinie;
Erhalten, in dem Frenet-Koordinatensystem, eines Bewertungsfunktionswerts jedes der mehreren Pfade zwischen dem Anfangspunkt des Abbiegepfads und dem Endpunkt des Abbiegepfads basierend auf den mehreren Trajektorienpunkten und einer vorbestimmten Bewertungsfunktion; und
Bestimmen (S2010), basierend auf dem Bewertungsfunktionswert jedes der mehreren Pfade, des Pfads unter den mehreren Pfaden, dessen Bewertungsfunktionswert die vorbestimmte Bedingung erfüllt, als den geplanten Abbiegepfad für das gesteuerte Fahrzeug,
wobei das Erhalten der mehreren Pfade zwischen dem Anfangspunkt des Abbiegepfads und dem Endpunkt des Abbiegepfads umfasst:
Erstellen einer SL-Rasterkarte innerhalb eines festgelegten Bereichs des Zielabbiegeknotenpunkts, wobei die mehreren Trajektorienpunkte in Rasterzellen der SL-Rasterkarte verteilt sind; und
Erhalten (S2005), in der SL-Rasterkarte basierend auf einem vorbestimmten Pfadsuchalgorithmus, der mehreren Pfade zwischen dem Anfangspunkt des Abbiegepfads und dem Endpunkt des Abbiegepfads,
wobei das Erhalten des Bewertungsfunktionswerts jedes der mehreren Pfade umfasst: für jeden der mehreren Pfade Erhalten (S2006) eines festgelegten Leistungsindikatorfunktionswerts jedes der Rasterzellen auf dem Pfad;
Bestimmen (S2007) eines Gewichtungswerts jeder der Rasterzellen basierend auf Verteilungsdaten der mehreren Trajektorienpunkte in jeder der Rasterzellen; und
Erhalten des Bewertungsfunktionswerts des Pfads basierend auf dem festgelegten Leistungsindikatorfunktionswert und dem Gewichtungswert jeder der Rasterzellen,
wobei das Bestimmen (S2010), basierend auf dem Bewertungsfunktionswert jedes der mehreren Pfade, des Pfads unter den mehreren Pfaden, dessen Bewertungsfunktionswert die vorbestimmte Bedingung erfüllt, als den geplanten Abbiegepfad für das gesteuerte Fahrzeug umfasst: Bestimmen, basierend auf dem Bewertungsfunktionswert jedes der mehreren Pfade, eines Pfads mit einem kleinsten Bewertungsfunktionswert unter den mehreren Pfaden als den geplanten Abbiegepfad für das gesteuerte Fahrzeug.

2. Verfahren nach Anspruch 1, wobei
die Referenzlinie eine äußere Abbiegebegrenzungslinie des Zielabbiegeknotenpunkts ist, wobei die äußere Abbiegebegrenzungslinie durch Versetzen einer äußersten Fahrstreifenlinie des Zielabbiegeknotenpunkts um einen vorbestimmten Abstand erhalten wird;
eine innere Abbiegebegrenzungslinie des Zielabbiegeknotenpunkts eine Gerade ist, die einen ersten Begrenzungspunkt an einer innersten Einfahrtsfahrstreifenlinie des Zielabbiegeknotenpunkts und einen zweiten Begrenzungspunkt an einer innersten Ausfahrtsfahrstreifenlinie des Zielabbiegeknotenpunkts verbindet; und
das Erstellen der SL-Rasterkarte innerhalb des festgelegten Bereichs des Zielabbiegeknotenpunkts umfasst:
Erstellen (S2004) einer SL-Rasterkarte zwischen der äußeren Abbiegebegrenzungslinie und der inneren Abbiegebegrenzungslinie des Zielabbiegeknotenpunkts.

3. Verfahren nach Anspruch 1, wobei der festgelegte Leistungsindikatorfunktionswert für jede der Rasterzellen basierend auf einer Kurswinkelabweichung und/oder einer Abstandsabweichung zwischen der Rasterzelle und einer benachbarten Rasterzelle erhalten wird.

4. Verfahren nach Anspruch 1, wobei das Bestimmen (S2007) des Gewichtungswerts jeder der Rasterzellen basierend auf den Verteilungsdaten der mehreren Trajektorienpunkte in jeder der Rasterzellen umfasst:
Festlegen des Gewichtungswerts einer Rasterzelle mit einem Trajektorienpunkt derart, dass er größer ist als der Gewichtungswert einer Rasterzelle ohne Trajektorienpunkt; und/oder
Festlegen des Gewichtungswerts einer Rasterzelle mit mehr Trajektorienpunkten derart, dass er größer ist als der Gewichtungswert einer Rasterzelle mit weniger Trajektorienpunkten oder keinem Trajektorienpunkt.

5. Verfahren nach Anspruch 1, wobei das Erhalten des Bewertungsfunktionswerts des Pfads basierend auf dem festgelegten Leistungsindikatorfunktionswert und dem Gewichtungswert jeder der Rasterzellen umfasst:
Erhalten (S2008) eines Korrekturfaktors des Gewichtungswerts jeder der Rasterzellen basierend auf Formdaten des Zielabbiegeknotenpunkts und Positionsdaten jeder der Rasterzellen; und
Erhalten (S2009) des Bewertungsfunktionswerts des Pfads basierend auf dem Leistungsindikatorfunktionswert, dem Gewichtungswert und dem Korrekturfaktor jeder der Rasterzellen.

6. Verfahren nach Anspruch 5, wobei das Erhalten (S2008) des Korrekturfaktors des Gewichtungswerts jeder der Rasterzellen basierend auf den Formdaten des Zielabbiegeknotenpunkts und den Positionsdaten jeder der Rasterzellen umfasst:
Erhalten, basierend auf einem Verhältnis zwischen der Länge und der Breite des Zielabbiegeknotenpunkts und auf L-Achsendaten jeder der Rasterzellen, von Abweichungsdaten jeder der Rasterzellen relativ zu einer festgelegten sicheren Position; und
Erhalten des Korrekturkoeffizienten des Gewichtungswerts jeder der Rasterzellen basierend auf den Abweichungsdaten jeder der Rasterzellen.

7. Verfahren nach einem der Ansprüche 1 bis 6, wobei das Erhalten (S110) der mehreren Trajektorienpunkte des Abbiegepfads des Zielfahrzeugs vor dem gesteuerten Fahrzeug innerhalb des Zielabbiegeknotenpunkts ferner umfasst:
Bestimmen (S2002) eines in derselben Richtung fahrenden Fahrzeugs, das eine vorbestimmte Bedingung erfüllt und sich vor dem gesteuerten Fahrzeug und innerhalb eines festgelegten Knotenpunktbereichs befindet, als das Zielfahrzeug, wobei die vorbestimmte Bedingung mindestens eines von Folgendem umfasst:
dass ein Abstand zwischen dem in derselben Richtung fahrenden Fahrzeug und dem gesteuerten Fahrzeug größer als oder gleich einem festgelegten Abstandsschwellenwert ist;
dass eine Differenz zwischen einem Kurswinkel des in derselben Richtung fahrenden Fahrzeugs und einem Kurswinkel des gesteuerten Fahrzeugs kleiner als ein festgelegter Winkelschwellenwert ist; und
dass eine Geschwindigkeit des in derselben Richtung fahrenden Fahrzeugs größer als oder gleich einem festgelegten Geschwindigkeitsschwellenwert ist.

8. Verfahren nach Anspruch 7, ferner umfassend:
Glätten des geplanten Abbiegepfads für das gesteuerte Fahrzeug mittels eines konjugierten Gradientenverfahrens.

9. Rechenvorrichtung (500), umfassend:
einen Prozessor (502); und
einen Speicher (501), auf dem ausführbarer Programmcode gespeichert ist, wobei der ausführbare Programmcode bei Ausführung durch den Prozessor (502) den Prozessor (502) veranlasst, das Verfahren nach einem der Ansprüche 1 bis 8 durchzuführen.

10. Fahrzeug, umfassend die Rechenvorrichtung nach Anspruch 9.

11. Computerlesbares Speichermedium, auf dem ausführbarer Programmcode gespeichert ist, wobei der ausführbare Programmcode bei Ausführung durch einen Prozessor den Prozessor veranlasst, das Verfahren nach einem der Ansprüche 1 bis 8 durchzuführen.

## Revendications

1. Méthode de planification de trajectoire de virage, comprenant :
l'obtention (S110) d'une pluralité de points de trajectoire d'une trajectoire de virage d'un véhicule cible devant un véhicule contrôlé à l'intérieur d'une intersection de virage cible, la pluralité de points de trajectoire comprenant un point de départ de la trajectoire de virage et un point d'arrivée de la trajectoire de virage ;
l'obtention d'une pluralité de chemins entre le point de départ de la trajectoire de virage et le point d'arrivée de la trajectoire de virage ; et
la détermination (S120), sur la base de la pluralité de points de trajectoire du véhicule cible, d'un chemin parmi la pluralité de chemins ayant une valeur de fonction d'évaluation satisfaisant une condition prédéterminée en tant que trajectoire de virage planifiée pour le véhicule contrôlé, pour permettre au véhicule contrôlé de se déplacer à travers l'intersection de virage cible sur la base de la trajectoire de virage planifiée,
dans laquelle ladite détermination (S120), sur la base de la pluralité de points de trajectoire du véhicule cible, du chemin parmi la pluralité de chemins ayant la valeur de fonction d'évaluation satisfaisant la condition prédéterminée en tant que trajectoire de virage planifiée pour le véhicule contrôlé comprend :
la détermination d'une ligne de référence d'un système de coordonnées de Frenet, la ligne de référence étant une ligne de limite de virage à l'intérieur de l'intersection de virage cible ;
la conversion de la pluralité de points de trajectoire d'un système de coordonnées actuel vers le système de coordonnées de Frenet sur la base de la ligne de référence ;
l'obtention, dans le système de coordonnées de Frenet, d'une valeur de fonction d'évaluation de chacun de la pluralité de chemins entre le point de départ de la trajectoire de virage et le point d'arrivée de la trajectoire de virage sur la base de la pluralité de points de trajectoire et d'une fonction d'évaluation prédéterminée ; et
la détermination (S2010), sur la base de la valeur de fonction d'évaluation de chacun de la pluralité de chemins, du chemin parmi la pluralité de chemins ayant la valeur de fonction d'évaluation satisfaisant la condition prédéterminée en tant que trajectoire de virage planifiée pour le véhicule contrôlé,
dans laquelle ladite obtention de la pluralité de chemins entre le point de départ de la trajectoire de virage et le point d'arrivée de la trajectoire de virage comprend :
la construction d'une carte de grille SL à l'intérieur d'une plage définie de l'intersection de virage cible, la pluralité de points de trajectoire étant distribués dans des grilles de la carte de grille SL ; et
l'obtention (S2005), dans la carte de grille SL sur la base d'un algorithme de recherche de chemin prédéterminé, de la pluralité de chemins entre le point de départ de la trajectoire de virage et le point d'arrivée de la trajectoire de virage,
dans laquelle ladite obtention de la valeur de fonction d'évaluation de chacun de la pluralité de chemins comprend : pour chacun de la pluralité de chemins, l'obtention (S2006) d'une valeur de fonction d'indicateur de performance définie de chacune des grilles sur le chemin ;
la détermination (S2007) d'une valeur de poids de chacune des grilles sur la base de données de distribution de la pluralité de points de trajectoire dans chacune des grilles ; et
l'obtention de la valeur de fonction d'évaluation du chemin sur la base de la valeur de fonction d'indicateur de performance définie et de la valeur de poids de chacune des grilles,
dans laquelle la détermination (S2010), sur la base de la valeur de fonction d'évaluation de chacun de la pluralité de chemins, du chemin parmi la pluralité de chemins ayant la valeur de fonction d'évaluation satisfaisant la condition prédéterminée en tant que trajectoire de virage planifiée pour le véhicule contrôlé comprend : la détermination, sur la base de la valeur de fonction d'évaluation de chacun de la pluralité de chemins, d'un chemin ayant une plus petite valeur de fonction d'évaluation parmi la pluralité de chemins en tant que trajectoire de virage planifiée pour le véhicule contrôlé.

2. Méthode selon la revendication 1, dans laquelle :
la ligne de référence est une ligne de limite de virage externe de l'intersection de virage cible, la ligne de limite de virage externe étant obtenue par décalage d'une ligne de voie la plus à l'extérieur de l'intersection de virage cible d'une distance prédéterminée ;
une ligne de limite de virage interne de l'intersection de virage cible est une ligne droite reliant un premier point de limite au niveau d'une ligne de voie d'entrée la plus à l'intérieur de l'intersection de virage cible et un deuxième point de limite au niveau d'une ligne de voie de sortie la plus à l'intérieur de l'intersection de virage cible ; et
ladite construction de la carte de grille SL à l'intérieur de la plage définie de l'intersection de virage cible comprend :
la construction (S2004) d'une carte de grille SL entre la ligne de limite de virage externe et la ligne de limite de virage interne de l'intersection de virage cible.

3. Méthode selon la revendication 1, dans laquelle la valeur de fonction d'indicateur de performance définie de chacune des grilles est obtenue sur la base d'un écart d'angle de cap et/ou d'un écart de distance entre la grille et une grille adjacente.

4. Méthode selon la revendication 1, dans laquelle ladite détermination (S2007) de la valeur de poids de chacune des grilles sur la base des données de distribution de la pluralité de points de trajectoire dans chacune des grilles comprend :
la définition d'un poids d'une grille avec un point de trajectoire pour qu'il soit supérieur à un poids d'une grille sans point de trajectoire ; et/ou
la définition d'un poids d'une grille avec plus de points de trajectoire pour qu'il soit supérieur à un poids d'une grille avec moins de points de trajectoire ou sans point de trajectoire.

5. Méthode selon la revendication 1, dans laquelle ladite obtention de la valeur de fonction d'évaluation du chemin sur la base de la valeur de fonction d'indicateur de performance définie et de la valeur de poids de chacune des grilles comprend :
l'obtention (S2008) d'un facteur de correction de la valeur de poids de chacune des grilles sur la base de données de forme de l'intersection de virage cible et de données de position de chacune des grilles ; et
l'obtention (S2009) de la valeur de fonction d'évaluation du chemin sur la base de la valeur de fonction d'indicateur de performance, de la valeur de poids et du facteur de correction de chacune des grilles.

6. Méthode selon la revendication 5, dans laquelle ladite obtention (S2008) du facteur de correction de la valeur de poids de chacune des grilles sur la base des données de forme de l'intersection de virage cible et des données de position de chacune des grilles comprend :
l'obtention, sur la base d'une relation proportionnelle entre une longueur et une largeur de l'intersection de virage cible, et de données d'axe L de chacune des grilles, de données d'écart de chacune des grilles par rapport à une position sûre définie ; et
l'obtention du coefficient de correction de la valeur de poids de chacune des grilles sur la base des données d'écart de chacune des grilles.

7. Méthode selon l'une quelconque des revendications 1 à 6, dans laquelle ladite obtention (S110) de la pluralité de points de trajectoire de la trajectoire de virage du véhicule cible devant le véhicule contrôlé à l'intérieur de l'intersection de virage cible comprend en outre :
la détermination (S2002) d'un véhicule de même direction qui satisfait une condition prédéterminée et se trouve devant le véhicule contrôlé et dans une plage d'intersection définie en tant que véhicule cible, la condition prédéterminée comprenant au moins l'un parmi :
une distance entre le véhicule de même direction et le véhicule contrôlé étant supérieure ou égale à un seuil de distance défini ;
une différence entre un angle de cap du véhicule de même direction et un angle de cap du véhicule contrôlé étant inférieure à un seuil d'angle défini ; et
une vitesse du véhicule de même direction étant supérieure ou égale à un seuil de vitesse défini.

8. Méthode selon la revendication 7, comprenant en outre :
le lissage, par un algorithme de gradient conjugué, de la trajectoire de virage planifiée pour le véhicule contrôlé.

9. Dispositif de calcul (500), comprenant :
un processeur (502) ; et
une mémoire (501) sur laquelle sont stockés des codes exécutables, dans laquelle les codes exécutables, lorsqu'ils sont exécutés par le processeur (502), amènent le processeur (502) à réaliser la méthode selon l'une quelconque des revendications 1 à 8.

10. Véhicule comprenant le dispositif de calcul selon la revendication 9.

11. Support de stockage lisible par ordinateur, sur lequel sont stockés des codes exécutables, dans lequel les codes exécutables, lorsqu'ils sont exécutés par un processeur, amènent le processeur à réaliser la méthode selon l'une quelconque des revendications 1 à 8.
